# EUROPEAN PATENT APPLICATION

(11) **EP 3 388 964 A1**
(43) Date of publication of application: **17.10.2018**
(21) Application number: 17305430.5
(22) Date of filing: 10.04.2017
(51) Int. Cl.: G06F 21/35, G06F 21/78

(54) **ENCRYPTED MEMORY CARD**

(71) Applicant: GEMALTO SA, 92190 Meudon (FR)
(72) Inventor: LACOUTURE, Dominique, 92190 Meudon (FR); LAMBERT, Patrick, 92190 Meudon (FR); ROCHA FURTADO, Daniel, 92190 Meudon (FR)
(74) Representative: Bricks, Amélie

(57) **Abstract**

The present invention relates to a memory card comprising a memory, a processor and an interface,
said memory card being configured for being inserted in a user apparatus (2) and configured for being connected to a remote contactless authorization device (3) and :
- when a command for writing first data in said memory is received from said user apparatus on the interface, encrypting said first data by the processor and storing said encrypted first data in said memory,
- when a user command for reading said first data stored in said memory is received from said user apparatus on the interface, verifying if the user is authorized to decrypt said first data based on at least one signal received from said remote contactless authorization device and when the user is authorized, decrypting said encrypted first data stored in said memory by the processor and outputting said decrypted encrypted first data to said user apparatus on said interface.

## Description

### FIELD OF THE INVENTION

The present invention relates to means for ensuring privacy of digital data and more particularly to a memory card storing data under an encrypted form.

### BACKGROUND OF THE INVENTION

Memory cards are used to store data on many electronic devices, such as photographic devices, film cameras, smart phones, computers... More and more users of such devices are concerned about the privacy of the data stored on such memory cards. Such users therefore need some way to protect such data from any unauthorized access.

Users using such memory cards in a professional context may have a particular need of a strong protection of the data stored on such memory cards and produced in the course of their professional activity. For example journalists working on sensitive topics and taking unauthorized pictures of locations or events may face serious issues if such pictures were discovered. It may also be needed to protect sensitive data stored on a memory card against any unauthorized access, even after a theft of the memory card and/or the electronic device in which it is inserted.

In order to protect data stored on memory cards, such data may be encrypted. Encryption indeed protects such data against any access by an individual that would not hold a decryption key or be aware of a decryption mechanism.

Existing solutions for data encryption on a memory card require using specific electronic devices, such as cameras, configured for handling on-the-fly encryption of any data written on a memory card inserted in such a device. Consequently, such existing solutions are not compatible with existing electronic devices that are not able to handle on-the-fly encryption. As a result, any user already owning an existing device that does not enable encryption would have to acquire such a specific device enabling encryption, if any exists, in order to have his data protected. This can be an issue from a financial point of view but also in terms of compatibility with the other pieces of equipment or software owned by the user, such as camera lenses.

Consequently, there is a need for a solution enabling encryption of data stored in memory cards and being compatible with any existing device recording data on such memory cards. Such a solution must particularly enable a decryption of encrypted data, in order to access it, but only when an authorized user asks for such a decryption.

### SUMMARY OF THE INVENTION

For this purpose and according to a first aspect, this invention therefore relates to a memory card comprising a memory, a processor and an interface,
said memory card being configured for being inserted in a user apparatus and configured for being connected to a remote contactless authorization device and :
- when a command for writing first data in said memory is received from said user apparatus on the interface, encrypting said first data by the processor and storing said encrypted first data in said memory,
- when a user command for reading said first data stored in said memory is received from said user apparatus on the interface, verifying if the user is authorized to decrypt said first data based on at least one signal received from said remote contactless authorization device and when the user is authorized, decrypting said encrypted first data stored in said memory by the processor and outputting said decrypted encrypted first data to said user apparatus on said interface.

It enables protecting by encryption any data written on the memory card. They also enable the user to conveniently authorize decryption of the encrypted data stored on the memory, while preventing any decryption by an authorized user. Moreover such a memory card may be used with any user apparatus using such a memory card as storage means.

The memory card according to the first aspect may be also configured for storing encrypted fake data and configured for being connected with a fake authorization device, and, after said user command for reading said first data has been received, when a signal is received from said fake authorization device, for decrypting said encrypted fake data stored in said memory by the processor and outputting said decrypted fake data instead of said first data to said user apparatus on said interface.

It enables to make an illegitimate user think he has access to the content of the memory card, whereas he is only given access to fake data while the valuable data stored on the memory card remains encrypted and hidden.

The memory card according to the first aspect may be also configured for destroying encrypted first data stored in the memory when a destruction signal is received from a remote device.

Therefore, the user may, in case of emergency, erase the memory of the memory card in order to permanently prevent any access to it by an illegitimate user.

Said memory and interface may comply with SD ("secure digital") card specifications.

Said at least one signal received from the remote contactless authorization device may be a signal indicative of the presence of the remote contactless authorization device.

Therefore, decryption of the encrypted data stored in the memory card may be authorized by just placing the remote contactless authorization device in the detection range of the memory card.

Said signal indicative of the presence of the remote contactless authorization device may result from a Bluetooth pairing or a Wi-Fi connection between the memory card and the remote contactless authorization device.

Decryption of the memory card therefore requires the user to place the remote contactless authorization device in close range to the memory card, to activate its Bluetooth or Wi-Fi interface and to establish a pairing or connection, which lowers the probability that an illegitimate user can perform or mimic such an authorization procedure.

Said signal received from the remote contactless authorization device may be a decryption authorization command from the remote contactless authorization device.

Therefore, the remote contactless authorization device may have an active role in the authorization process, such as performing an authentication process of the user.

According to a second aspect, this invention relates to a system comprising :
- a remote contactless authorization device,
- a user apparatus,
- the memory card according the first aspect inserted in said user apparatus.

Said remote contactless authorization device may be a NFC ("Near Field communication") tag.

Using a NFC tag enables the remote contactless authorization device to be powered from the outside, by the memory card itself, and therefore prevents any malfunction of the remote contactless authorization device because of a power failure.

Said user's apparatus may be a standard photo camera.

The system according to the second aspect may comprise also a second remote contactless authorization device and said memory card may be configured for, when a user command for writing second data in said memory is received from said user apparatus on the interface, verifying if the user is authorized to write unencrypted data on the memory card based on at least one signal received from said second remote contactless authorization device and when the user is authorized, storing said second data, unencrypted, in said memory.

It enables the user to temporarily deactivate encryption for example be useful in order to minimize the time length required for writing data on the memory card, or to minimize power consumption.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system according to the present invention;
- Figure 2 is a schematic illustration of a system according to an embodiment of the present invention;
- Figure 3 is a schematic illustration of a system according to an embodiment of the present invention during a preliminary process;
- Figure 4 is a schematic illustration of a system as illustrated in Figure 1 with a second remote contactless authorization device according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

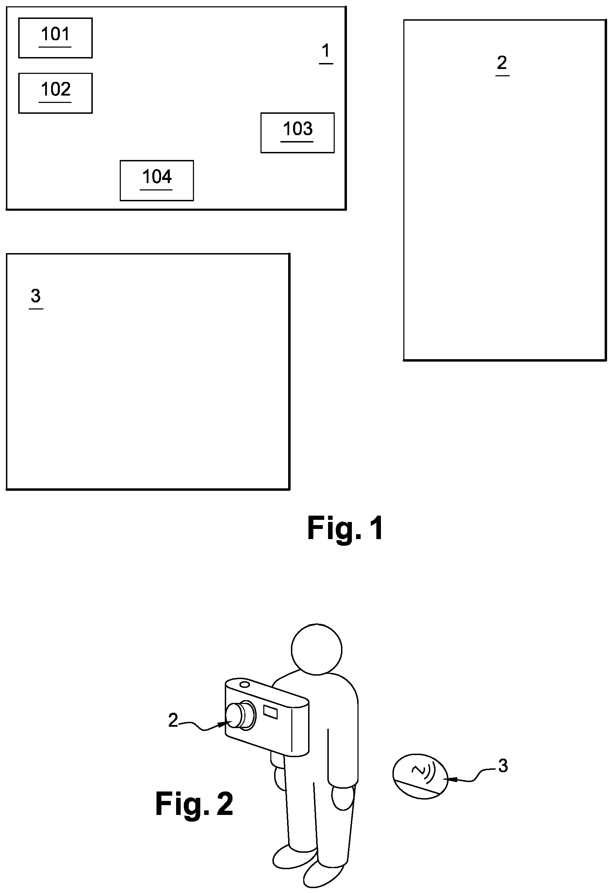

The invention aims at protecting by encryption any data written on a memory card 1, and to enable a safe but easy decryption of such data. As depicted on figure 1, such a memory card may comprise a mass storage memory 101, a processor 102 and an interface 103. The memory 101 and the interface 103 may comply with any existing memory card standard, such as SD, SDHC, SDXC, microSD, CompactFlash, MemoryStick... card specifications. Other technical specifications of the memory card, such as its dimensions, or power consumption, may comply accordingly with a chosen standard.

The memory card 1 is configured for being inserted in a user apparatus 2. Such a user apparatus 2 may be any electronic device writing data to/reading data from a memory card. For example it may be a standard photo camera, a film camera, a smartphone, a tablet, a computer, a TV... The memory card 1 is connected to the user apparatus 2 through the interface 103. The memory card may draw the power it needs from the user apparatus through the interface 103. The memory card and the user apparatus also communicate through the interface 103 in order to exchange read or write commands and the associated data. The memory card 1 may also include a wireless interface 104 enabling it to perform wireless communication with any remote electronic device that would not be connected to the user apparatus 2.

In order to protect the data stored in its memory 101, the memory card 1 is configured for, when a command for writing first data in the memory 101 is received from the user apparatus 2 on the interface 103, encrypting said first data by the processor 102 and storing the obtained encrypted first data in the memory 101.

By doing so, any data to be stored on the memory card is first encrypted by the processor of the memory card. The user apparatus 2 does not need to be aware of such an encryption. The write command sent by the user apparatus 2 to the memory card 1 is a standard write command does not take into account data encryption. From the user apparatus point of view, data are just transmitted to the memory card for storage in the memory 101. Consequently any existing user apparatus may interact in this way with the memory card according to the invention in order to have data stored under an encrypted form in the memory card.

Since all data stored in the memory card is stored under an encrypted form, such data is protected against any reading by an unauthorized user who would not be able to decrypt the data.

Another aim of the invention is to enable decryption of the data stored on the memory card, for example by a user of the user apparatus, in a way that is convenient to the user while ensuring that no unauthorized user is able to decrypt the data stored on the memory card and get access to it.

In order to do so, decryption of data on the memory card may be wirelessly activated by a remote device held by the user of the user apparatus. Using such a remote device the legitimate user of the user apparatus may conveniently have data stored in the memory card decrypted just by keeping the remote device in the vicinity of the memory card. On the contrary, an unauthorized user that would not possess the appropriate remote device would not be able to activate data decryption and would therefore not be able to read it.

More precisely, the memory card 1 is configured for being connected to a remote contactless authorization device 3 and is further configured for, when a user command for reading first data stored in the memory 101 is received from the user apparatus 2 on the interface 103, verifying if the user is authorized to decrypt the first data based on at least one signal received from the remote contactless authorization device 3 and when the user is authorized, decrypting the encrypted first data stored in the memory 101 by the processor 102 and outputting the decrypted encrypted first data to the user apparatus 2 on the interface 103.

The remote contactless authorization device 3 may be any electronic device capable of performing a wireless communication with the memory card 1. For example it may be a NFC tag. It may be a simple electronic device transmitting an infrared signal. It may also be a more complex device such as a smartphone, a smartwatch, a tablet, a laptop... In that case it may include a wireless interface and communicate with the memory card 1 by any existing wireless communication protocol such as Bluetooth or Wi-Fi.

In a first embodiment, the signal received from the remote contactless authorization device 3, and authorizing data decryption, is a signal indicative of the presence of the remote contactless authorization device in close range to the memory card. In that case, as depicted on **Figure 2****,** placing the remote contactless authorization device in the detection range of the memory card enables the user to signify the memory card that data decryption is authorized when it receives a data read command for the user apparatus. Such a signal may be a simple answer signal by a NFC tag. It may also result from a Bluetooth pairing or a Wi-Fi connection between the memory card and the remote contactless authorization device.

In a second embodiment, the signal received from the remote contactless authorization device is a decryption authorization command from the remote contactless authorization device. Such an authorization signal may be emitted by the remote contactless authorization device only after a user authentication protocol is successfully performed on the remote contactless authorization device, for example using a PIN code or biometric authentication.

In another embodiment, the memory card may continuously or at a predetermined frequency check if it receives the remote contactless authorization device signal and after successfully receiving it and enabling data decryption, it may stop decrypting data when the signal is lost.

In any case, the user may very easily forbid any decryption of the data stored on the memory card, just by getting rid of the remote contactless authorization device or by placing it in a distant secret location.

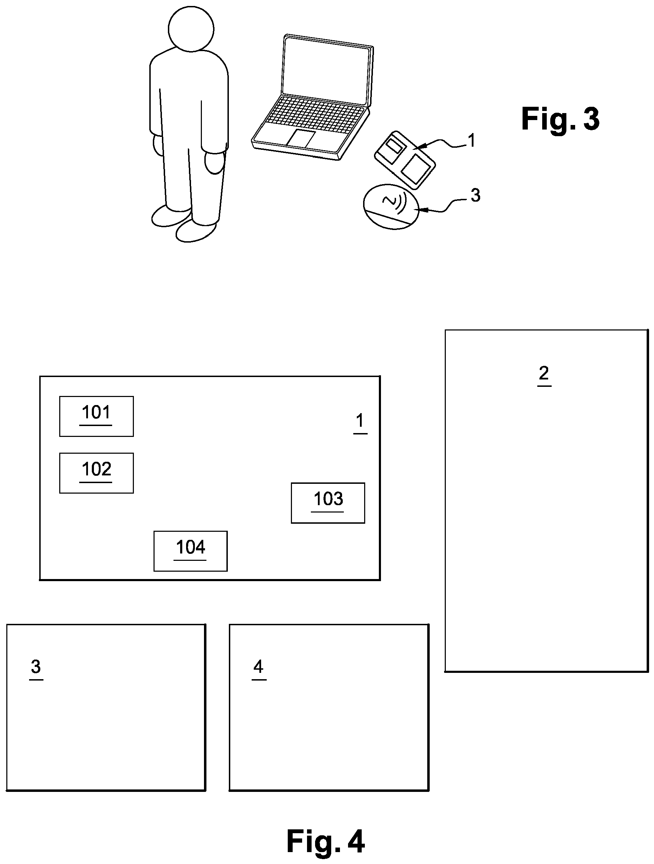

In order to setup the memory card and the remote contactless authorization device, the user may perform a preliminary process, as depicted on **Figure 3****,** during which:
- the remote contactless authorization device 3 is configured for connecting to the memory card, for example by Bluetooth or Wi-Fi, or is configured for emitting a particular presence signal, for example in case of a NFC tag, and/or is configured for performing an authentication process prior to sending a decryption authorization command,
- and the memory card 1 is instructed what the activation method is, i.e. which signal it should receive, and from which device, before authorizing data decryption.

In order to hide the data stored on the memory card, the user may prepare a remote contactless authorization device that would instruct the memory card to provide fake data instead of the data requested in a read command. More precisely, the memory card may be configured for storing encrypted fake data and for being connected with a fake authorization device. After a user command for reading first data has been received, when a signal is received from the fake authorization device, the memory card may be configured for decrypting by the processor the encrypted fake data stored in the memory and outputting the decrypted fake data instead of the first data to the user apparatus on the interface. By doing so, an illegitimate user can be tricked into making him think he owns the right remote contactless authorization device, and has access to valuable data stored on the memory card, whereas he only has access to fake worthless data.

In addition, the legitimate user may also setup a remote contactless device for erasing the memory card memory. In that case, the memory card is configured for destroying encrypted first data stored in the memory when a destruction signal is received from such a remote device.

In the paragraphs here above, data written on the memory card is always encrypted and the remote contactless authorization device is used for activating decryption of data stored on the memory card. A similar mechanism may be used for selectively deactivating encryption of data on the memory card, instead of automatically encrypting any data sent to the memory card for storage.

In that case, as depicted on **Figure 4****,** the memory card may be configured for being connected to a second remote contactless authorization device 4 and, when a user command for writing second data in the memory 101 is received from the user apparatus 2 on the interface 103, for verifying if the user is authorized to write unencrypted data based on at least one signal received from said second remote contactless authorization device and when the user is authorized, storing said second data, unencrypted, in said memory.

Using such a memory card, the user may temporarily deactivate encryption by placing the second remote contactless authorization device in the communication range of the memory card. As long as encryption is deactivated, data sent to the memory card are stored without encryption. This may for example be useful in order to minimize the time length required for writing data on the memory card, or to minimize power consumption.

As a result, the memory card and the remote contactless authorization device according to the invention enable protecting by encryption any data written on the memory card. They also enable the user to conveniently authorize decryption of the encrypted data stored on the memory, while preventing any decryption by an authorized user. Moreover such a system may be used with any electronic user apparatus using such a memory card as storage means, without any specific configuration of such a user apparatus.

## Claims

1. A memory card (1) comprising a memory (101), a processor (102) and an interface (103),
said memory card being configured for being inserted in a user apparatus (2) and configured for being connected to a remote contactless authorization device (3) and :
- when a command for writing first data in said memory (101) is received from said user apparatus (2) on the interface (103), encrypting said first data by the processor (102) and storing said encrypted first data in said memory (101),
- when a user command for reading said first data stored in said memory (101) is received from said user apparatus (2) on the interface (103), verifying if the user is authorized to decrypt said first data based on at least one signal received from said remote contactless authorization device (3) and when the user is authorized, decrypting said encrypted first data stored in said memory (101) by the processor (102) and outputting said decrypted encrypted first data to said user apparatus (2) on said interface (103).

2. The memory card of claim 1, configured for storing encrypted fake data and configured for being connected with a fake authorization device, and, after said user command for reading said first data has been received, when a signal is received from said fake authorization device, for decrypting said encrypted fake data stored in said memory by the processor and outputting said decrypted fake data instead of said first data to said user apparatus on said interface.

3. The memory card of claim 1, configured for destroying encrypted first data stored in the memory when a destruction signal is received from a remote device.

4. The memory card of claim 1, wherein said memory and interface comply with SD ("secure digital") card specifications.

5. The memory card of claim 1, wherein said at least one signal received from the remote contactless authorization device is a signal indicative of the presence of the remote contactless authorization device.

6. The memory card of claim 5, wherein said signal indicative of the presence of the remote contactless authorization device results from a Bluetooth pairing or a Wi-Fi connection between the memory card and the remote contactless authorization device.

7. The memory card of claim 1, wherein said signal received from the remote contactless authorization device is a decryption authorization command from the remote contactless authorization device.

8. A system comprising:
- a remote contactless authorization device (3),
- a user apparatus (2),
- the memory card (1) of claim 1 inserted in said user apparatus.

9. The system of claim 8, wherein said remote contactless authorization device (3) is a NFC ("Near Field communication") tag.

10. The system of claim 8, wherein said user's apparatus (2) is a standard photo camera.

11. The system of claim 8, comprising also a second remote contactless authorization device (4) and said memory card (1) being configured for, when a user command for writing second data in said memory (101) is received from said user apparatus (2) on the interface (103), verifying if the user is authorized to write unencrypted data on the memory card based on at least one signal received from said second remote contactless authorization device and when the user is authorized, storing said second data, unencrypted, in said memory (101).
